# EUROPEAN PATENT APPLICATION

(11) **EP 4 545 488 A1**
(43) Date of publication of application: **30.04.2025**
(21) Application number: 24206085.3
(22) Date of filing: 11.10.2024
(51) Int. Cl.: C01G 53/50, C01G 53/80, C01G 53/84, H01M 4/525

(54) **POSITIVE ELECTRODE ACTIVE MATERIAL AND LITHIUM SECONDARY BATTERY COMPRISING THE SAME**

(30) Priority: 27.10.2023 KR 20230145590
(71) Applicant: ECOPRO BM CO., LTD., Cheongju-si, Chungcheongbuk-do 28116 (KR)
(72) Inventor: KIM, Seong-Kyun, 28116 Cheongju-si, Chungcheongbuk-do (KR); JUNG, Hyun Su, 28116 Cheongju-si, Chungcheongbuk-do (KR); LIM, Ra Na, 28116 Cheongju-si, Chungcheongbuk-do (KR); LIM, Kyung Min, 28116 Cheongju-si, Chungcheongbuk-do (KR)
(74) Representative: Vossius & Partner Patentanwälte Rechtsanwälte mbB

(57) **Abstract**

The present invention relates to a positive electrode active material and a lithium secondary battery including the same, and more particularly, to a positive electrode active material including an overlithiated lithium manganese-based oxide, which can be synthesized at a lower temperature than that in a conventional synthesis process, and compensate for phase development and lithium ion conductivity, which are insufficient when synthesized at low temperatures, and a lithium secondary battery including the same.

## Description

### BACKGROUND

### 1. Field of the Invention

The present invention relates to a positive electrode active material and a lithium secondary battery including the same, and more particularly, to a positive electrode active material including an overlithiated lithium manganese-based oxide, which can be synthesized at a lower temperature than that in a conventional synthesis process, and compensate for phase development and lithium ion conductivity, which are insufficient when synthesized at low temperatures, and a lithium secondary battery including the same.

### 2. Discussion of Related Art

Batteries store electrical power by using materials facilitating an electrochemical reaction at a positive electrode and a negative electrode. As a representative example of such batteries, there is a lithium secondary battery storing electrical energy due to a difference in chemical potential when lithium ions are intercalated/deintercalated into/from a positive electrode and a negative electrode.

The lithium secondary battery uses materials enabling reversible intercalation/deintercalation of lithium ions as positive electrode and negative electrode active materials and is manufactured by charging an organic electrolyte solution or a polymer electrolyte solution between the positive electrode and the negative electrode.

A representative material used as a positive electrode active material of a lithium secondary battery is a lithium composite oxide. The lithium composite oxide may be LiCoO₂, LiMn₂O₄, LiNiO₂, LiMnO₂, or a mixed oxide comprising two or more of Ni, Co, Mn or Al.

Among the positive electrode active materials, LiCoO₂ is most widely used due to excellent lifetime characteristics and charging/discharging efficiency, but it is expensive due to cobalt being a limited resource, which is used as a raw material, and thus has a disadvantage of limited price competitiveness.

Lithium manganese oxides such as LiMnO₂ and LiMn₂O₄ have advantages of excellent thermal safety and low costs, but also have problems of small capacity and poor high-temperature characteristics. In addition, while an LiNiO₂-based positive electrode active material exhibits a battery characteristic such as high discharge capacity, due to cation mixing between Li and a transition metal, it is difficult to synthesize the LiNiO₂-based positive electrode active material, thereby causing a big problem in rate performance.

In addition, depending on the intensity of such cation mixing, a large amount of Li by-products is generated. Most of the Li by-products include LiOH and Li₂CO₃, may cause gelation in the preparation of a positive electrode paste, or cause gas generation due to repeated charging/discharging after the manufacture of an electrode. In addition, residual Li₂CO₃ among the Li by-products increases cell swelling to act as a cause of degrading lifetime characteristics.

Various candidate materials for compensating for these shortcomings of conventional positive electrode active materials are being proposed.

In one example, there is on-going research to use an overlithiated lithium manganese-based oxide in which an excess of Mn among transition metals is included and a lithium molar content is higher than the sum of the malar contents of the transition metals as a positive electrode active material for a lithium secondary battery. Such an overlithiated lithium manganese-based oxide is also referred to as an overlithiated layered oxide (OLO).

Although the OLO has an advantage in that it can theoretically exhibit high capacity under a high voltage operating environment, in fact, due to the excessive amount of Mn contained in the oxide, electrical conductivity is relatively low, and thus the rate performance of a lithium secondary battery using OLO are low. As such, when the rate performance is low, there is a problem in that charge/discharge capacity and lifetime efficiency (capacity retention) are degraded during the cycling of a lithium secondary battery.

To solve the above-described problems, although various studies on changing the composition of OLO have been conducted, such attempts have not yet reached the level of commercialization.

### SUMMARY OF THE INVENTION

In the lithium secondary battery market, the growth of lithium secondary batteries for electric vehicles is driving the market, and accordingly, the demand for positive electrode active materials used in lithium secondary batteries is also continuously increasing.

For example, conventionally, to ensure stability, lithium secondary batteries using lithium iron phosphate (LFP) have mainly been used, but recently, the use of a nickel-based lithium composite oxide having a larger energy capacity per weight than LFP is increasing (of course, relatively inexpensive LFP is still used to reduce costs).

In addition, recently, nickel-based lithium composite oxides mainly used as positive electrode active materials for high-capacity lithium secondary batteries essentially use ternary metal elements such as nickel, cobalt and manganese or nickel, cobalt and aluminum. However, since cobalt is not only subject to unstable supply, but also excessively expensive compared to other raw materials, a positive electrode active material with a new composition, which can reduce a cobalt content or exclude cobalt is needed.

Considering these circumstances, although an overlithiated lithium manganese-based oxide can meet the above-mentioned expectations of the market, there is a limitation that the electrochemical properties or stability of the lithium manganese-based oxide are still insufficient to replace a commercially available positive electrode active material such as a ternary lithium composite oxide with a nickel-cobalt-manganese (NCM) or nickel-cobalt-aluminum (NCA) composition.

In addition, the lithium manganese-based oxide has a different crystal structure from a commercially available ternary lithium composite oxide with a nickel-cobalt-manganese (NCM) or nickel-cobalt-aluminum (NCA) composition, and in order to form a phase specific to the lithium manganese-based oxide, a temperature higher than the calcination temperature of the ternary lithium composite oxide is required. As such, the increase in calcination temperature, which is essential for the synthesis process, acts as a cause of increasing the production costs of the lithium manganese-based oxide.

When the calcination temperature is low and the formation of a specific phase for the lithium manganese-based oxide is insufficient, not only does lithium-ion conductivity decrease, resulting in lower overall electrochemical properties, but as the specific surface area increases, side reactions between the lithium manganese-based oxide and an electrolyte solution increase, leading to a risk of decreased stability.

The appropriate calcination temperature of the lithium manganese-based oxide may be 850 °C, and preferably 900 °C or more, and under this harsh calcination condition, the size of primary particles constituting the lithium manganese-based oxide may become excessively large compared to the commercially available ternary-type lithium composite oxide, resulting in degraded rate performance.

Therefore, the present invention is directed to providing a positive electrode active material that reduces the production costs of the lithium manganese-based oxide and suppresses the overgrowth of primary particles by making it possible to sufficiently induce phase development specific to the lithium manganese-based oxide even at relatively low temperatures.

Particularly, the present invention is directed to providing a positive electrode active material, which can promote phase development even at low temperatures when LiF is used in the calcination of a lithium manganese-based oxide, and reduce side reactions between the lithium manganese-based oxide and an electrolyte solution without a decrease in rate performance by reducing the specific surface area to an appropriate level.

In addition, the present invention is directed to providing a positive electrode active material, which can compensate for the insufficient lithium-ion conductivity of the lithium manganese-based oxide by forming an LiF-containing coating layer on the surface of the lithium manganese-based oxide after low-temperature synthesis.

In addition, the present invention is directed to providing a positive electrode, which includes a positive electrode current collector and a positive electrode active material layer formed on the positive electrode current collector, wherein the positive electrode active material layer includes the positive electrode active material defined in the present invention.

The present invention is also directed to providing a lithium secondary battery using the positive electrode defined in the present invention, which has improved capacity and rate performance compared to a lithium secondary battery using conventional OLO as a positive electrode active material.

The objects of the present invention are not limited to the above-mentioned objects, and other objects and advantages of the present invention which are not mentioned can be understood by the following description and more clearly understood by exemplary embodiments of the present invention. In addition, it will be readily apparent that the objects and advantages of the present invention may be realized by the means and combinations thereof indicated in the claims.

To solve the above-described technical problems, according to one aspect of the present invention, a positive electrode active material, which includes a lithium manganese-based oxide in which a phase belonging to a C2/m space group and a phase belonging to a R3-m space group are dissolved, is provided.

Generally, in a commercially available ternary lithium composite oxide with a nickel-cobalt-manganese (NCM) or nickel-cobalt-aluminum (NCA) composition, the phase belonging to the R3-m space group is present as a single phase, whereas, in the overlithiated lithium manganese-based oxide defined herein, a phase belonging to a C2/m space group and a phase belonging to an R3-m space group are dissolved therein.

In one embodiment, there is a coating containing fluorine on at least a part of the surface of the lithium manganese-based oxide. The coating may contain LiF.

In X-ray diffraction analysis of the positive electrode active material using Cu-Kα rays, the full width at half maximum (FWHMₐ) of the diffraction peak appearing in the area of 2θ=18°~19° is 0.14 or more and less than 0.221, and the full width at half maximum (FWHM_{b}) of the diffraction peak appearing in the area of 2θ=44°~45°is 0.31 or more and less than 0.641. In X-ray diffraction analysis of the positive electrode active material using Cu-Kα rays, the ratio (FWHM_{b}/FWHMₐ) of the FWHM_{b} of the diffraction peak appearing in the area of 2θ=44°~45° to the FWHMₐ of the diffraction peak appearing in the area of 2θ=18°~19° is preferably more than 1.738 and 2.665 or less.

In one embodiment, the lithium manganese-based oxide may be present as secondary particles formed by aggregating a plurality of primary particles, and a higher concentration of LiF may be present on the surface region of the secondary particle than in the center of the secondary particle.

In addition, the lithium manganese-based oxide may be present as secondary particles formed by aggregating a plurality of primary particles, and there may be a gradient in which the concentration of fluorine decreases from the surface region of the secondary particle to the center of the secondary particle along the grain boundary between the primary particles.

In one embodiment, the lithium manganese-based oxide may be represented by Chemical Formula 1 or 1-1 below.

[Chemical Formula 1] Li(LiₐM1ₓM2_{y})O_{2-b}X_{b}

Wherein, M1 is at least one selected from Ni and Mn, M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, wherein M2 does not overlap M1, X is a halogen optionally substituting some of the oxygen present in the lithium manganese-based oxide, 0<a≤0.7, 0≤b≤0.1, 0<x≤1, 0≤y<1, and 0<x+y≤1.

[Chemical Formula 1-1] rLi₂MnO_{3-c}X'_{c}·(1-r)Li_{a'}M1_{x'}M2_{y'}O_{2-b'}X_{b'}

Wherein, M1 is at least one selected from Ni and Mn, M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, wherein M2 does not overlap M1, X and X' each are independently halogens optionally substituting some of the oxygen present in the lithium manganese-based oxide, 0<r≤0.7, 0<c≤0.1, 0<a'≤1, 0<b'≤0.1, 0<x'≤1, 0≤y'<1, and 0<x'+y'≤1.

According to another aspect of the present invention, a positive electrode including the above-described positive electrode active material is provided.

According to still another aspect of the present invention, a lithium secondary battery using the above-described positive electrode is provided.

### BRIEF DESCRIPTION OF THE DRAWINGS

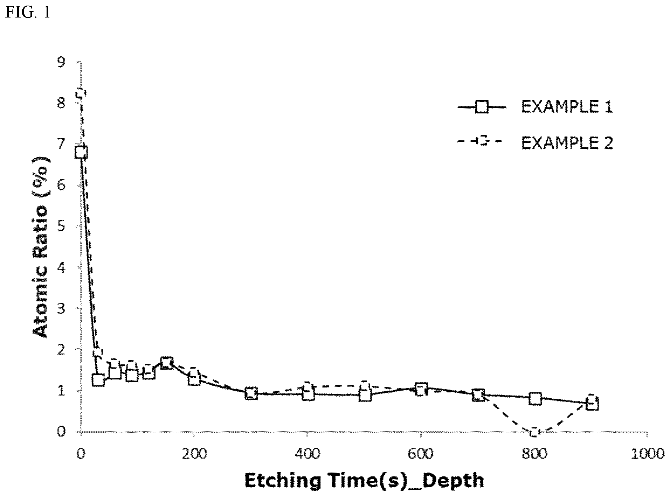

FIG. 1 is a graph showing a change in the content of an F element according to an etching depth through XPS analysis according to Experimental Example 4.

### DETAILED DESCRIPTION OF EXEMPLARY EMBODIMENTS

In order to better understand the present invention, certain terms are defined herein for convenience. Unless defined otherwise herein, scientific and technical terms used herein will have meanings commonly understood by those of ordinary skill in the art. In addition, unless specifically indicated otherwise, terms in a singular form also include plural forms, and terms in a plural form should be understood to include singular forms as well. Amounts or ratios indicated herein are molar amounts or molar ratios, unless otherwise specified in the context.

Hereinafter, a positive electrode active material including an overlithiated lithium manganese-based oxide and a lithium secondary battery including the positive electrode active material according to some embodiments of the present invention will be described in further detail.

### Positive electrode active material

According to one aspect of the present invention, a positive electrode active material including a lithium manganese-based oxide in which a phase belonging to a C2/m space group and a phase belonging to an R3-m space group are dissolved is provided.

The phase belonging to a C2/m space group and the phase belonging to a R3-m space group may be distinguished not only through the composition of each phase, but also by a peak specific to each phase during XRD analysis. For example, the specific peak for the phase belonging to a C2/m space group may appear in the area of 2θ=20.8±1°, and the specific peak for the phase belonging to a R3-m space group may appear in the area of 2θ=18.6±1°.

As the lithium manganese-based oxide is a composite oxide in which a phase belonging to a C2/m space group and a phase belonging to a R3-m space group are dissolved, a phase belonging to a C2/m space group and a phase belonging to a R3-m space group coexist in the lithium manganese-based oxide. In other words, the lithium manganese-based oxide is a composite oxide comprising a phase belonging to a C2/m space group and a phase belonging to a R3-m space group. The phase belonging to a C2/m space group and the phase belonging to a R3-m space group can be considered to be dispersed in the remainder of the lithium manganese-based oxide. In addition, the lithium manganese-based oxide is different from a composite oxide having a spinel crystal structure belonging to an Fd-3m space group (e.g., LiMn₂O₄ or an oxide having a composition similar thereto).

The lithium manganese-based oxide includes at least lithium, manganese, and a transition metal. The transition metal may include at least one selected from nickel, cobalt, and aluminum. Thus, the term "transition metal" as used in the present invention includes aluminum. Furthermore, manganese in the present invention is typically not intended if the term "transition metal" is used. In addition, the lithium manganese-based oxide may include lithium, nickel, and manganese, and may optionally further include a transition metal other than nickel.

The lithium manganese-based oxide may also be referred to an overlithiated layered oxide (OLO) because the equivalent weight of lithium present in the lithium manganese-based oxide is larger than the sum of the equivalent weight of other transition metals (generally, when the molar ratio (Li/Metal molar ratio) of lithium to all metal elements, other than lithium, in the lithium manganese-based oxide is larger than 1).

In addition, the lithium manganese-based oxide is also referred to an overlithiated layered oxide with excess manganese because the content of manganese present in the lithium manganese-based oxide is larger than the content of other transition metals.

Generally, considering that a commercially available ternary lithium composite oxide with a nickel-cobalt-manganese (NCM) or nickel-cobalt-aluminum (NCA) composition has a content of manganese among all metal elements, excluding lithium, of 20 mol% or less, the lithium manganese-based oxide has a relatively high proportion of manganese (e.g., 50 mol% or more, 52 mol% or more, 53 mol% or more, or 55 mol% or more) among all metal elements compared to the commercially-available ternary lithium composite oxide.

In addition, considering that a commercially-available ternary lithium composite oxide with a nickel-cobalt-manganese (NCM) or nickel-cobalt-aluminum (NCA) composition has a content of nickel among all metal elements, excluding lithium, of 60 mol% or more (80 mol% or more for the high-Ni type), the lithium manganese-based oxide has a relatively low proportion of nickel among all metal elements (e.g., less than 50 mol%, 48 mol% or less, 46 mol% or less, 45 mol% or less, 44 mol% or less, 42 mol% or less, or 40 mol% or less) compared to the commercially-available ternary lithium composite oxide.

There is also a difference in that the Li/Metal molar ratio measured from the lithium manganese-based oxide defined herein is larger than that of a ternary lithium composite oxide such as nickel-cobalt-manganese (NCM) or nickel-cobalt-aluminum (NCA). For example, the Li/Metal molar ratio of the ternary lithium composite oxide such as nickel-cobalt-manganese (NCM) or nickel-cobalt-aluminum (NCA) has a value almost close to 1. Meanwhile, the Li/Metal molar ratio of the lithium manganese-based oxide defined herein may be higher than 1, and preferably has a value ranging from 1.1 to 1.6, 1.1 to 1.5, 1.2 to 1.6, or 1.2 to 1.5. It is to be understood that the "metal" in "Li/Metal molar ratio" is a metal other than Li. Thus, the above "Li/Metal molar ratio" may also be referred to as "Li/(Metal other than Li) molar ratio".

Accordingly, the lithium manganese-based oxide used herein may be defined as a composite oxide in which the content of manganese among all metal elements, excluding lithium, is 50 mol% or more, preferably 60 mol% or more, or a composite oxide in which the content of manganese is 50 mol% or more, preferably 60 mol% or more, and the nickel content is less than 50 mol%, preferably 40 mol% or less, among all metal elements, excluding lithium.

In addition, the lithium manganese-based oxide used herein may be defined as a composite oxide in which a molar ratio of lithium to all metal elements, excluding lithium, is higher than 1, or ranges from 1.1 to 1.6, 1.1 to 1.5, 1.2 to 1.6, or 1.2 to 1.5, and the content of manganese among all metal elements, excluding lithium, is 50 mol% or more, or a composite oxide in which a molar ratio of lithium to all metal elements, excluding lithium, is higher than 1, or ranges from 1.1 to 1.6, 1.1 to 1.5, 1.2 to 1.6, or 1.2 to 1.5, the content of manganese is 50 mol% or more and the content of nickel is less than 50 mol%, among all metal elements, excluding lithium.

Despite the differences in composition described above, the lithium manganese-based oxide may also serve as a composite metal oxide capable of intercalation/deintercalation of lithium ions.

The lithium manganese-based oxide included in the positive electrode active material defined herein may be present as particles including at least one primary particle.

When the lithium manganese-based oxide is present as a single primary particle, the lithium manganese-based oxide may be referred to as a single particle. On the other hand, when the lithium manganese-based oxide is present as an aggregate in which a plurality of primary particles are aggregated, the lithium manganese-based oxide may be referred to as a secondary particle.

The positive electrode active material may include at least one selected from a lithium manganese-based oxide present as a single particle and a lithium manganese-based oxide present as a secondary particle in which a plurality of primary particles are aggregated.

The primary particle constituting the lithium manganese-based oxide may have a rod shape, an oval shape, and/or an irregular shape. In addition, unless specifically intended during the manufacturing process, primary particles having various shapes are present in the same positive electrode active material. In addition, the primary particle refers to a particle unit in which no grain boundary appears when the particle is observed at a magnification of 5,000 to 20,000 times using a scanning electron microscope.

The primary particle constituting the lithium manganese-based oxide defined herein may have an average particle diameter in the range of from 0.05 to 5 µm, 0.05 to 1.0 µm, or 0.25 to 0.75 µm. Here, the average particle diameter of the primary particles may be the average value of the length of the primary particle in the major axis direction and the length of the primary particle in the minor axis direction ([major axis length+minor axis length]/2). Also, the average particle diameter of the primary particle can be calculated as the average value of the particle diameters of all primary particles observed from the surface SEM image of the lithium manganese-based oxide.

When the average particle diameter of the primary particles is smaller than 0.05 µm, the lithium manganese-based oxide (secondary particles) consisting of the primary particles has a relatively large specific surface area. In this case, the possibility of side reactions between the lithium manganese-based oxide and an electrolyte solution may increase during the storage or operation of a lithium secondary battery.

On the other hand, when the average particle diameter of the primary particles is larger than 5 µm, as the growth of the primary particles is excessively induced, the diffusion path of lithium ions in the primary particle also becomes longer. When the diffusion path of lithium ions in the primary particle is excessively long, the mobility of lithium ions in the primary particle and the diffusivity of lithium ions mediated by the primary particle decrease, which becomes the cause of an increase in resistance of the lithium manganese-based oxide (secondary particles) composed of the primary particles.

Accordingly, in order to reduce the specific surface area of the lithium manganese-based oxide and prevent the mobility of lithium ions in the primary particles and the diffusivity of lithium ions via the primary particles from being reduced, the average particle diameter of the primary particles may be in the range of from 0.05 to 5 µm, 0.1 to 1.0 µm, or 0.25 to 0.75 µm.

When the lithium manganese-based oxide is present as secondary particles in which a plurality of primary particles are aggregated, the average particle diameter of the secondary particles may be in the range of from 0.5 to 15 µm, 1.0 to 15 µm, 2.0 to 15 µm, 3.0 to 15 µm, 4.0 to 15 µm, or 5.0 to 15 µm. The average particle diameter of the secondary particles may vary according to the number of primary particles constituting the secondary particle. The average particle diameter (D₅₀) of the secondary particles may be measured using a laser diffraction method. For example, after dispersing the secondary particles in a dispersion medium, introducing the same into a commercially available laser diffraction particle size measurement device (e.g., Microtrac MT 3000) and irradiating ultrasonic waves at about 28 kHz at an output of 60 W, a volume cumulative particle size distribution graph may be obtained, from which a particle size corresponding to 50% of the volume accumulation amount is obtained, and thus the average particle diameter (D₅₀) may be measured. The term "particle size" is used herein interchangeably with the term "particle diameter". Any particle diameter mentioned herein are median volume-based particle diameters as determined by laser diffraction, unless specified otherwise in the context.

Unless otherwise defined, the term "surface of the primary particle" used herein means the outer surface of the primary particle exposed to the outside. Likewise, the term "surface of the secondary particle" used herein refers to the outer surface of the secondary particle exposed to the outside. Here, the "surface of the secondary particle" formed by aggregating a plurality of primary particles correspond to the exposed surface of the primary particle present on the surface region of the secondary particle.

In addition, unless defined otherwise, the term "surface region of a particle" used herein refers to the area relatively close to the "outermost surface" of a particle, and the "center of a particle" refers to the area relatively closer to the "exact center" of a particle, compared to the "surface region." Accordingly, the "surface region of the primary particle" refers to the area relatively close to the "outermost surface" of the primary particle, and the "center of the primary particle" refers to the region relatively closer to the "exact center" of the primary particle, compared to the "surface region." Likewise, the "surface region of a secondary particle" refers to the region relatively close to the "outermost surface" of the secondary particle, and the "center of a secondary particle" refers to the area relatively closer to the "exact center" of the secondary particle, compared to the "surface region."

Here, the area excluding the "surface region of a particle" in any particle may be defined as the "center of a particle."

For example, when the radius of the primary particle is r, the area where the distance from the surface of the primary particle is 0 to 0.5r may be defined as the surface region of the primary particle, and the region where a distance from the exact center of the primary particle is 0 to 0.5r may be defined as the center of the primary particle. When the radius of the primary particle is 0.5 µm, the surface region of the primary particle is the region where the distance from the surface of the primary particle ranges from 0 to 0.25 µm, and the center of the primary particle may be defined as the region where the distance from the exact center of the primary particle ranges from 0 to 0.25 µm.

In addition, as needed, when the radius of the primary particle is r, the region in which the distance from the surface of the primary particle ranges from 0 to 0.1r or 0 to 0.2r is defined as the surface region of the primary particle, and the region in which the distance from the exact center of the primary particle ranges from 0 to 0.2r or 0 to 0.5r may be defined as the center of the primary particle.

Likewise, when the radius of the secondary particle is r, the area where the distance from the surface of the secondary particle ranges from 0 to 0.5r may be defined as the surface region of the secondary particle, and the region where a distance from the exact center of the secondary particle ranges from 0 to 0.5r may be defined as the center of the secondary particle. When the radius of the secondary particle is 2.0 µm, the surface region of the secondary particle is the region where the distance from the surface of the secondary particle ranges from 0 to 1.0 µm, and the center of the secondary particle may be defined as the region where the distance from the exact center of the secondary particle ranges from 0 to 1.0 µm.

In addition, as needed, when the radius of the secondary particle is r, the area where the distance from the surface of the secondary particle ranges from 0 to 0.1r or 0 to 0.2r may be defined as the surface region of the secondary particle, and the region where a distance from the exact center of the secondary particle ranges from 0 to 0.2r or 0 to 0.5r may be defined as the center of the secondary particle.

The lithium manganese-based oxide defined herein may be an overlithiated lithium manganese-based oxide represented by Chemical Formula 1 below. The composition represented by Chemical Formula 1 below may be the average composition that reflects the composition of a coating present on at least a part of the surface of the lithium manganese-based oxide.

[Chemical Formula 1] Li(LiₐM1ₓM2_{y})O_{2-b}X_{b}

Here, M1 is at least one selected from Ni and Mn, M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, wherein M2 does not overlap M1, X is a halogen that can replace at least some of the oxygen present in the lithium manganese-based oxide, 0<a≤0.7, 0≤b≤0.1, 0<x≤1, 0≤y<1, and 0<x+y≤1. It is to be understood that typically at least one of M1 and M2 is an element other than manganese.

For the types of halogens that can be used as X, the periodic table can be referenced, and F, Cl, Br and/or I, and preferably, F may be used.

In another embodiment, the lithium manganese-based oxide may be represented by Chemical Formula 1-1 below. The composition represented by Chemical Formula 1-1 below may be the average composition that reflects the composition of a coating present on at least a part of the surface of the lithium manganese-based oxide.

[Chemical Formula 1-1] rLi₂MnO_{3-c}X'_{c}·(1-r)Li_{a'}M1_{x'}M2_{y'}O_{2-b'}X_{b'}

Here, M1 is at least one selected from Ni and Mn, M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, M2 does not overlap M1, X and X' each are halogens that can independently replace at least some of the oxygen present in the lithium manganese-based oxide, 0<r≤0.7, 0≤c≤0.1, 0<a'≤1, 0≤b'≤0.1, 0<x'≤1, 0≤y'<1, and 0<x'+y'≤1. It is to be understood that typically at least one of M1 and M2 is an element other than manganese.

For the types of halogens that can be used as X and X', the periodic table can be referenced, and F, Cl, Br and/or I, and preferably, F may be used.

When M1 in Chemical Formula 1 and Chemical Formula 1-1 is Ni, M2 may contain Mn, and when M1 is Mn, M2 may contain Ni. In addition, when M1 is Ni and Mn, M2 may not be present, or if present, M2 may be an element other than Ni and Mn.

That is, when M1 is Ni, M2 may include at least one selected from Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd (preferably, at least one selected from Co, Al, P, Nb, B, Si, Ti, Zr, Ba, K, Mo, and W, more preferably, at least one selected from Co, P, B, Si, Ti, Zr, and W, and even more preferably, at least one selected from P, B, and Si), and Mn.

When M1 is Mn, M2 may include at least one selected from Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd (preferably, at least one selected from Co, Al, P, Nb, B, Si, Ti, Zr, Ba, K, Mo, and W, more preferably, at least one selected from Co, P, B, Si, Ti, Zr, and W, and even more preferably, at least one selected from P, B, and Si), and Ni.

When M1 is Ni and Mn, M2 may include at least one selected from Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, preferably, at least one selected from Co, Al, P, Nb, B, Si, Ti, Zr, Ba, K, Mo, and W, more preferably, at least one selected from Co, P, B, Si, Ti, Zr, and W, and even more preferably, at least one selected from P, B, and Si.

The lithium manganese-based oxide represented by Chemical Formula 1 or Chemical Formula 1-1 may optionally include cobalt. When the lithium manganese-based oxide includes cobalt, the mole fraction of cobalt with respect to the mole number of all metal elements in the lithium manganese-based oxide may be 20% or less, preferably, 15% or less, and more preferably, 10% or less. In another case, the lithium manganese-based oxide may have a cobalt-free composition not containing cobalt.

The Li/Metal molar ratio measured from the lithium manganese-based oxide represented by Chemical Formula 1 or Chemical Formula 1-1 may be more than 1, 1.1 to 1.6, 1.1 to 1.5, 1.2 to 1.6, or 1.2 to 1.5. It is possible to form an overlithiated lithium manganese-based oxide only when the Li/Metal molar ratio measured from the lithium manganese-based oxide has at least a value greater than 1. In addition, in order to properly form a solid solution in which a phase belonging to a C2/m space group and a phase belonging to a R3-m space group are dissolved, and at the same time, exhibit high capacity under a high voltage operating environment, the Li/Metal molar ratio of the lithium manganese-based oxide is preferably 1.1 to 1.6, 1.1 to 1.5, 1.2 to 1.6, or 1.2 to 1.5. It is to be understood that the "metal" in "Li/Metal molar ratio" is a metal other than Li. Thus, the above "Li/Metal molar ratio" may also be referred to as "Li/(Metal other than Li) molar ratio".

In addition, to properly form a solid solution in which a phase belonging to a C2/m space group and a phase belonging to a R3-m space group are dissolved, the content of manganese among all metal elements, excluding lithium, in the lithium manganese-based oxide represented by Chemical Formula 1 or Chemical Formula 1-1 is preferably 50 mol% or more.

In order for the lithium manganese-based oxide to have the characteristics of OLO exhibiting high capacity under a high voltage operating environment, the content of manganese among all metal elements, excluding lithium, in the lithium manganese-based oxide may be 50 mol% or more and less than 80 mol%, 51 mol% or more and less than 80 mol%, 52 mol% or more and less than 80 mol%, 53 mol% or more and less than 80 mol%, 54 mol% or more and less than 80 mol%, 55 mol% or more and less than 80 mol%, 50 mol% to 75 mol%, 51 mol% to 75 mol%, 52 mol% to 75 mol%, 53 mol% to 75 mol%, 54 mol% to 75 mol%, or 55 mol% to 75 mol%.

When the content of manganese in the lithium manganese-based oxide exceeds 80 mol%, a phase transition may occur due to the migration of a transition metal (particularly, manganese) in the lithium manganese-based oxide during the formation and/or operation of a lithium secondary battery. As such a phase transition occurs at a random position in the lithium manganese-based oxide, the phase transition may cause a decrease in charge/discharge capacity or voltage decay during the cycling of a lithium secondary battery using the lithium manganese-based oxide as a positive electrode active material. In addition, as the content of manganese in the lithium manganese-based oxide exceeds 80 mol%, there is a risk that the lithium manganese-based oxide may exhibit characteristics close to those of a composite oxide having a spinel crystal structure belonging to the Fd-3m space group (e.g., LiMn₂O₄ or an oxide having a similar composition thereto).

To properly form a solid solution in which a phase belonging to a C2/m space group and a phase belonging to a R3-m space group are dissolved, the content of nickel among all metal elements, excluding lithium, present in the lithium manganese-based oxide represented by Chemical Formula 1 or Chemical Formula 1-1 may be less than 50 mol%, 48 mol% or less, 46 mol% or less, 45 mol% or less, 44 mol% or less, 42 mol% or less, or 40 mol% or less.

When the content of nickel in the lithium manganese-based oxide is 50 mol% or more, it may be difficult to sufficiently form a C2/m phase, or the phase belonging to a C2/m space group and the phase belonging to a R3-m space group may not form a sufficient solid solution, which may cause a phase separation during the formation and/or operation of the lithium secondary battery.

Generally, in the commercially-available ternary lithium composite oxide with a nickel-cobalt-manganese (NCM) or nickel-cobalt-aluminum (NCA) composition, the phase belonging to a R3-m space group is present as a single phase.

On the other hand, the overlithiated lithium manganese-based oxide represented by Chemical Formula 1 or Chemical Formula 1-1 is present as a composite oxide in which an oxide of a phase belonging to a C2/m space group represented by rLi₂MnO_{3-c}X'_{c} (hereinafter, referred to as 'C2/m phase') and an oxide of a phase belonging to a R3-m space group represented by (1-r)LiₐM1ₓM2_{y}O_{2-b}X_{b} (hereinafter, referred to as 'R3-m phase') are dissolved. In the present invention, the fact that a phase belonging to a C2/m space group and a phase belonging to a R3-m space group are dissolved means that an oxide of a C2/m phase and an oxide of a R3-m phase are present in a solid solution.

Here, a composite oxide in which a phase belonging to a C2/m space group and a phase belonging to a R3-m space group are simply physically and/or chemically bonded or attached does not correspond to the solid solution defined therein.

For example, a composite oxide having a phase belonging to a C2/m space group whose surface is coated with a metal oxide with a phase belonging to a R3-m space group by mixing a metal oxide having a phase belonging to a C2/m space group and a metal oxide with a phase belonging to a R3-m space group does not correspond to the solid solution defined herein.

In the lithium manganese-based oxide represented by Formula 1, when r is more than 0.7, since the proportion of Li₂MnO_{3-b'}X'_{b'}, which is a C2/m phase oxide, in the lithium manganese-based oxide is excessively large, the irreversible capacity and resistance of the positive electrode active material increases, as a result, there is a risk that the discharge capacity may decrease. That is, to improve surface kinetics by sufficiently activating the C2/m-phase oxide with relatively high resistance in the lithium manganese-based oxide, the R3-m phase oxide is preferably present in a predetermined proportion or more.

In one embodiment, a coating containing fluorine may be formed on at least a part of the surface of the lithium manganese-based oxide. When the lithium manganese-based oxide is a secondary particle formed by aggregating a plurality of primary particles, the coating may cover at least a part of the surface(s) of the primary particles and/or the secondary particles. As the coating containing fluorine is formed on the surface of the lithium manganese-based oxide, side reactions with an electrolyte solution, which occur on the surface of the lithium manganese-based oxide may be reduced and a decrease in charge transfer and/or diffusivity (i.e., surface kinetics) of lithium ions on the surface of the lithium manganese-based oxide may be alleviated and/or prevented.

The surface where adjacent primary particles in the secondary particle come in contact with each other may be referred to as an interface between primary particles, and the interface between the primary particles may be defined as a grain boundary between the primary particles. In addition, the primary particle may be spaced apart from a neighboring primary particle to form a void in the secondary particle.

The coating may be defined as an area in which fluorine is present on the surface(s) of the primary particle and/or the secondary particle, and may be entirely or partially formed on the surface(s) of the primary particle and/or the secondary particle. When the coating layer is partially formed on the surface(s) of the primary particle and/or the secondary particle, the shape of the coating layer may be referred to as an island shape.

In addition, fluorine may be present in a physically- and/or chemically-bound state in the form of a compound on the surface of the primary particle and/or the secondary particle, or may be present in a partially dissolved state.

The coating present in the secondary particle may be formed as fluorine diffuses from the surface region of the secondary particle toward the center of the secondary particle along the grain boundaries between the primary particles.

Specifically, a main compound constituting the coating (e.g., fluorine-containing compound) may be present in a diffused state from the surface region of the secondary particle toward the center of the secondary particle. In addition, as the coating diffuses from the surface region of the secondary particle toward the center of the secondary particle, an element (e.g., fluorine) mainly included in the coating may have a concentration gradient (e.g., expressed as a change rate of atomic ratio) that decreases from the surface region of the secondary particle to the center of the secondary particle.

In one embodiment, the coating may include a fluorine-containing compound. Here, a representative example of the fluorine-containing compound is LiF. After low-temperature heat treatment of a mixture of a precursor of the lithium manganese-based oxide in an oxide state, a lithium raw material, and LiF, LiF may be present as a coating layer formed on the surface of the lithium manganese-based oxide.

For example, while the lithium manganese-based oxide and a fluorine-containing polymer (e.g., PVDF or PTFE) may be mixed and thermally treated to form LiF on the surface of the lithium manganese-based oxide, since such fluorine coating using a fluorine-containing polymer is performed after a hydroxide precursor or oxide precursor is calcinated with the lithium manganese-based oxide, not only does it not contribute to lowering the calcination temperature of an existing synthesis process, it is also unrelated to the phase development of the lithium manganese-based oxide.

LiF in the positive electrode active material may be present at 0.5 to 1.5 mol%. The fact that the content of LiF in the positive electrode active material is less than 0.5 mol% means that the content of LiF used in the calcination of an oxide precursor of the lithium manganese-based oxide is excessively small. In this case, during calcination, the phase development of the lithium manganese-based oxide may not be sufficiently induced. On the other hand, the fact that the content of LiF in the positive electrode active material is larger than 1.5 mol% means that the content of LiF used in the calcination of the oxide precursor of the lithium manganese-based oxide is excessively large. In this case, the content of LiF present on the surface of the lithium manganese-based oxide is excessively large, so the surface resistance of the lithium manganese-based oxide is changed, which has the risk of reducing the overall electrochemical properties of a lithium secondary battery using the lithium manganese-based oxide as a positive electrode active material. LiF present in the positive electrode active material may be calculated based on the content of LiF mixed with the oxide precursor of the lithium manganese-based oxide.

In addition, the average thickness of the coating present on the surface of the lithium manganese-based oxide is 5 to 100 nm, 5 to 50 nm, or 5 to 30 nm. The thickness of the coating present on the surface of the lithium manganese-based oxide may be measured through XPS analysis for fluorine, which is a target element, in the lithium manganese-based oxide (e.g., refer to the F depth profile shown in FIG. 1). When the average etching rate of an XPS analysis device that measures the F depth profile is 0.3 nm/1sec, and fluorine is significantly detected for the etching rime ranging from 0 to 30 sec, the thickness of the coating containing fluorine may be calculated to be 9 nm. Likewise, when fluorine is significantly detected during the etching time of 0 to 100 sec, the thickness of the coating containing fluorine may be calculated to be 30 nm.

When fluorine is detected in the secondary particle due to LiF also being present at the grain boundary between the primary particles, the thickness of the coating present on the surface of the lithium manganese-based oxide may be defined as a thickness from the outermost surface of the secondary particle to the depth at which the concentration of the fluorine begins to remain constant. In addition, the average thickness of the coating present on the surface of the lithium manganese-based oxide may be calculated as the average value of the thickness measured by repeating the above-described XPS analysis several times (10 times or more).

The content of fluorine in the coating, calculated through the XPS analysis, may be 2 to 10 at%. The fact that the content of fluorine in the coating is less than 2 at% means that the content of LiF used in the calcination of the oxide precursor of the lithium manganese-based oxide is excessively small. In this case, during calcination, the phase development of the lithium manganese-based oxide may not be sufficiently induced. On the other hand, the fact that the content of the fluorine in the coating is larger than 10 at% means that the content of LiF used in the calcination of the oxide precursor of the lithium manganese-based oxide is excessively large. In this case, the content of LiF present on the surface of the lithium manganese-based oxide is excessively large, so the surface resistance of the lithium manganese-based oxide is changed, which has a risk of reducing the overall electrochemical properties of a lithium secondary battery using the lithium manganese-based oxide as a positive electrode active material.

In addition, LiF present in the coating may act as a lithium ion diffusion path, that is, a two-dimensional and/or three-dimensional path(s) through which lithium ions diffuse in the lithium manganese-based oxide.

As the lithium ion diffusion path in the lithium manganese-based oxide is formed, the resistance to the movement of lithium ions mediated by the lithium manganese-based oxide may be reduced, and further, it can contribute to improving the rate performance of a lithium secondary battery using the lithium manganese-based oxide as a positive electrode active material.

The positive electrode active material according to the present invention may have a BET specific surface area of 1.6 m²/g or more and 3.2 m²/g or less, 1.6 m²/g or more and 3.1 m²/g or less, 1.7 m²/g or more and 3.1 m²/g or less, or 1.72 m²/g or more and 3.09 m²/g or less.

According to the present invention, phase development may be promoted even at low temperatures using LiF in the calcination of a lithium manganese-based oxide, and side reactions between the lithium manganese-based oxide and an electrolyte solution may be reduced by reducing the specific surface area.

In addition, as defined herein, upon the low temperature calcination of the oxide precursor of the lithium manganese-based oxide, the positive electrode active material using LiF may exhibit the following characteristics when subjected to X-ray diffraction analysis using Cu-Kα rays.

In the X-ray diffraction analysis of the positive electrode active material using Cu-Kα rays, the full width at half maximum (FWHMₐ) of the diffraction peak appearing in the area of 2θ=18°~19° may be 0.14 or more and less than 0.221, or 0.14 to 0.205, and the full width at half maximum (FWHM_{b}) of the diffraction peak appearing in the area of 2θ=44°~45° may be 0.31 or more and less than 0.641, 0.31 or more and less than 0.614, or 0.31 to 0.516.

In addition, compared to the case of not using LiF during low temperature calcination, both the full width at half maximum appearing in the area of 2θ=18°~19° and the full width at half maximum appearing in the area of 2θ=44°~45° may be reduced. Compared to the case of not using LiF during low temperature calcination, the fact that both the full width at half maximum appearing in the area of 2θ=18°~19° and the full width at half maximum appearing in the area of 2θ=44°~45° were reduced means that the development of a phase specific to the lithium manganese-based oxide was promoted.

In addition, in the X-ray diffraction analysis of the positive electrode active material using Cu-Kα rays, the ratio (FWHM_{b}/FWHMₐ) of the full width at half maximum appearing in the area of 2θ=44°~45° to the full width at half maximum appearing in the area of 2θ=18°~19° may be more than 1.738 and 2.665 or less, or 2214 to 2.665.

In addition, when a coating layer containing LiF is present on the surface of the lithium manganese-based oxide, LiF reacts with deionized water to produce HF during pH titration, and a reversible reaction in which HF decomposes Li₂CO₃ dissolved in deionized water occurs.

### < Li₂CO₃ decomposition reaction by LiF>

LiF + H₂O → LiOH + HF

2HF + Li₂CO₃ → 2LiF + CO₂ + H₂O

That is, as the content of LiF on the surface of the positive electrode active material (lithium manganese-based oxide) increases, an LiOH content measured during pH titration increases, and an Li₂CO₃ content decreases. Accordingly, when LiF is decomposed and doped into the lithium manganese-based oxide instead of being coated on the surface of the lithium manganese-based oxide during heat treatment, no changes in LiOH and Li₂CO₃ contents caused by the above-described irreversible reaction are observed.

According to the above-described reversible reaction by LiF, the LiOH content measured from the neutralization titration of the positive electrode active material defined herein may be larger than the Li₂CO₃ content.

### Lithium secondary battery

According to another aspect of the present invention, a positive electrode that includes a positive electrode current collector and a positive electrode active material layer formed on the positive electrode current collector may be provided. The positive electrode active material layer may include a lithium manganese-based oxide having a coating formed on at least a part of the surface as a positive electrode active material according to the above-described embodiments of the present invention.

Accordingly, a detailed description of the lithium manganese-based oxide will be omitted, and only the remaining components not described above will be described below. In addition, hereinafter, the above-described lithium manganese-based oxide is referred to as a positive electrode active material for convenience.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may conventionally have a thickness of 3 to 500 µm, and fine irregularities may be formed on the surface of the current collector, thereby increasing the adhesive strength of a positive electrode active material. For example, the positive electrode current collector may be used in various forms such as a film, a sheet, a foil, a net, a porous body, foam, a non-woven fabric, etc.

The positive electrode active material layer may be prepared by coating the positive electrode current collector with a positive electrode slurry composition including the positive electrode active material, a conductive material, and optionally as needed, a binder.

Here, the positive electrode active material is included at 80 to 99 wt%, and specifically, 85 to 98.5 wt% with respect to the total weight of a positive electrode slurry for forming the positive electrode active material layer. When the positive electrode active material is included in the above content range, excellent capacity characteristics may be exhibited, but the present invention is not limited thereto.

The conductive material is used to impart conductivity to an electrode, and is not particularly limited as long as it has electron conductivity without causing a chemical change in a battery. A specific example of the conductive material may be graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may be generally contained at 0.1 to 15 wt% with respect to the total weight of a positive electrode slurry for forming the positive electrode active material layer.

The binder serves to improve the adhesion between particles of the positive electrode active material and the adhesion between the positive electrode active material and the current collector. A specific example of the binder may be polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, an ethylenepropylene-diene polymer (EPDM), a sulfonated EPDM, styrene butadiene rubber (SBR), fluorine rubber, or various copolymers thereof, and one or a mixture of two or more thereof may be used. The binder may be included at 0.1 to 15 wt% with respect to the total weight of a positive electrode slurry for forming the positive electrode active material layer.

The positive electrode may be manufactured according to a conventional method of manufacturing a positive electrode, except that the above-described positive electrode active material is used. Specifically, the positive electrode may be manufactured by coating the positive electrode current collector with a positive electrode slurry composition prepared by dissolving or dispersing the positive electrode active material, and optionally, a binder and a conductive material in a solvent, and drying and rolling the resulting product.

The solvent may be a solvent generally used in the art, and may be dimethyl sulfoxide (DMSO), isopropyl alcohol, N-methylpyrrolidone (NMP), acetone or water, and one or a mixture of two or more thereof may be used. In consideration of the coating thickness and production yield of a slurry, the solvent is used at a sufficient amount for dissolving or dispersing the positive electrode active material, the conductive material and the binder and then imparting a viscosity for exhibiting excellent thickness uniformity when the slurry is applied to manufacture a positive electrode.

In addition, in another exemplary embodiment, the positive electrode may be manufactured by casting the positive electrode slurry composition on a separate support, and laminating a film obtained by delamination from the support on the positive electrode current collector.

Moreover, still another aspect of the present invention provides an electrochemical device including the above-described positive electrode. The electrochemical device may be, specifically, a battery, a capacitor, and more specifically, a lithium secondary battery.

The lithium secondary battery may specifically include a positive electrode, a negative electrode disposed opposite to the positive electrode, and a separator and a liquid electrolyte, which are interposed between the positive electrode and the negative electrode. Here, since the positive electrode is the same as described above, for convenience, detailed description of the positive electrode will be omitted, and other components which have not been described above will be described in detail.

The lithium secondary battery may further include a battery case accommodating an electrode assembly of the positive electrode, the negative electrode and the separator, and optionally, a sealing member for sealing the battery case.

The negative electrode may include a negative electrode current collector and a negative electrode active material layer disposed on the negative electrode current collector.

The negative electrode current collector is not particularly limited as long as it has high conductivity without causing a chemical change in a battery, and may be, for example, copper, stainless steel, aluminum, nickel, titanium, calcined carbon, or copper or stainless steel whose surface is treated with carbon, nickel, titanium or silver, or an aluminum-cadmium alloy. In addition, the negative electrode current collector may generally have a thickness of 3 to 500 µm, and like the positive electrode current collector, fine irregularities may be formed on the current collector surface, thereby enhancing the binding strength of the negative electrode active material. For example, the negative electrode current collector may be used in various forms such as a film, a sheet, a foil, a net, a porous body, foam, a non-woven fabric, etc.

The negative electrode active material layer may be formed by coating the negative electrode current collector with a negative electrode slurry composition including the negative electrode active material, a conductive material, and optionally as needed, a binder.

As the negative electrode active material, a compound enabling the reversible intercalation and deintercalation of lithium may be used. A specific example of the negative electrode active material may be a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, an Si alloy, an Sn alloy or an Al alloy; a metal oxide capable of doping and dedoping lithium such as SiO_{β} (0<β<2), SnO₂, vanadium oxide, or lithium vanadium oxide; or a composite including the metallic compound and the carbonaceous material such as an Si-C composite or an Sn-C composite, and any one or a mixture of two or more thereof may be used. In addition, as the negative electrode active material, a metallic lithium thin film may be used. In addition, as a carbon material, both low-crystalline carbon and high-crystalline carbon may be used. Representative examples of the low-crystalline carbon include soft carbon and hard carbon, and representative examples of the high-crystalline carbon include amorphous, sheet-type, flake-type, spherical or fiber-type natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included at 80 to 99 wt% with respect to the total weight of a negative electrode slurry for forming the negative electrode active material layer.

The binder is a component aiding bonding between a conductive material, an active material and a current collector, and may be generally added at 0.1 to 10 wt% with respect to the total weight of a negative electrode slurry for forming the negative electrode active material layer. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene monomer (EPDM), sulfonated EPDM, styrene butadiene rubber, nitrile-butadiene rubber, fluorine rubber, and various copolymers thereof.

The conductive material is a component for further improving the conductivity of the negative electrode active material, and may be added at 10 wt% or less, and preferably, 5 wt% or less with respect to a negative electrode slurry for forming the total weight of the negative electrode active material layer. The conductive material is not particularly limited as long as it does not cause a chemical change in the battery, and has conductivity, and may be, for example, graphite such as natural graphite or artificial graphite; carbon black such as acetylene black, Ketjen black, channel black, furnace black, lamp black or thermal black; a conductive fiber such as a carbon fiber or a metal fiber; a conductive powder such as fluorinated carbon, aluminum, or nickel powder; a conductive whisker such as zinc oxide or potassium titanate; a conductive metal oxide such as titanium oxide; or a conductive material such as a polyphenylene or a derivative thereof.

In an exemplary embodiment, the negative electrode active material layer may be prepared by coating the negative electrode current collector with a negative electrode slurry composition prepared by dissolving or dispersing a negative electrode active material, and optionally, a binder and a conductive material in a solvent, and drying the coated composition, or may be prepared by casting the negative electrode slurry composition on a separate support and then laminating a film delaminated from the support on the negative electrode current collector.

Meanwhile, in the lithium secondary battery, the separator is not particularly limited as long as it is generally used in a lithium secondary battery to separate a negative electrode from a positive electrode and provide a diffusion path for lithium ions, and particularly, the separator has low resistance to ion mobility of a liquid electrolyte and an excellent electrolyte solution impregnability. Specifically, a porous polymer film, for example, a porous polymer film prepared of a polyolefin-based polymer such as an ethylene homopolymer, a propylene homopolymer, an ethylene/butene copolymer, an ethylene/hexene copolymer and an ethylene/methacrylate copolymer, or a stacked structure including two or more layers thereof may be used. In addition, a conventional porous non-woven fabric, for example, a non-woven fabric formed of a high melting point glass fiber or a polyethylene terephthalate fiber may be used. In addition, a coated separator including a ceramic component or a polymer material may be used to ensure thermal resistance or mechanical strength, and may be optionally used in a single- or multi-layered structure.

In addition, the electrolyte used in the present invention may be an organic electrolyte, an inorganic electrolyte, a solid polymer electrolyte, a gel-type polymer electrolyte, a solid inorganic electrolyte, or a molten-type inorganic electrolyte, which is able to be used in the production of a lithium secondary battery, but the present invention is not limited thereto.

Specifically, the electrolyte may include an organic solvent and a lithium salt.

The organic solvent is not particularly limited as long as it can serve as a medium enabling the movement of ions involved in an electrochemical reaction of a battery. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic C2 to C20 hydrocarbon group, and may include a double bonded aromatic ring or an ether bond); an amide-based solvent such as dimethylformamide; a dioxolane-based solvent such as 1,3-dioxolane; or a sulfolane-based solvent. Among these, a carbonate-based solvent is preferably used, and a mixture of a cyclic carbonate (for example, ethylene carbonate or propylene carbonate) having high ion conductivity and high permittivity to increase the charging/discharging performance of a battery and a low-viscosity linear carbonate-based compound (for example, ethyl methyl carbonate, dimethyl carbonate or diethyl carbonate) is more preferably used. In this case, by using a mixture of a cyclic carbonate and a chain-type carbonate in a volume ratio of approximately 1:1 to 1:9, the electrolyte solution may exhibit excellent performance.

The lithium salt is not particularly limited as long as it is a compound capable of providing a lithium ion used in a lithium secondary battery. Specifically, the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂. The concentration of the lithium salt is preferably in the range of 0.1 to 2.0M. When the concentration of the lithium salt is included in the above-mentioned range, since the electrolyte has suitable conductivity and viscosity, the electrolyte solution can exhibit excellent electrolytic performance and lithium ions can effectively migrate.

When the electrolyte used herein is a solid electrolyte, for example, a solid inorganic electrolyte such as a sulfide-based solid electrolyte, an oxide-based solid electrolyte, a nitride-based solid electrolyte, or a halide-based solid electrolyte may be used, and preferably, a sulfide-based solid electrolyte is used.

As a material for a sulfide-based solid electrolyte, a solid electrolyte containing Li, an X element (wherein, X is at least one selected from P, As, Sb, Si, Ge, Sn, B, Al, Ga and In) and S may be used. Examples of the sulfide-based solid electrolyte material may include Li₂S-P₂S₅, Li₂S-P₂S-LiX (wherein, X is a halogen element such as I or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (wherein, m and n are integers, and Z is Ge, Zn or Ga), Li₂S-GeS₂, Li₂S-SiS₂-Li₃PO₄, and Li₂S-SiS₂-LiₚMO_{q} (wherein, p and q are integers, and M is P, Si, Ge, B, Al, Ga or In).

A solid electrolyte, and preferably, a sulfide-based solid electrolyte may be amorphous, crystalline, or a state in which an amorphous phase and crystalline phase are mixed.

Materials for an oxide-based solid electrolyte include Li₇La₃Zr₂O₁₂, Li₇₋ₓLa₃Zr₁₋ₓNbₓO₁₂, Li₇₋₃ₓLa₃Zr₂AlₓO₁₂, Li₃ₓLa_{2/3-x}TiO₃, Li₁₊ₓAlₓTi₂₋ₓ(PO₄)₃, Li₁₊ₓAlₓGe₂₋ₓ(PO₄)₃, Li₃PO₄, Li₃₊ₓPO₄₋ₓNₓ (LiPON), and Li₂₊₂ₓZn₁₋ₓGeO₄ (LISICON).

The above-described solid electrolyte may be disposed as a separate layer (solid electrolyte layer) between a positive electrode and a negative electrode. In addition, the solid electrolyte may be partially included in a positive electrode active material layer of the positive electrode independent of the solid electrolyte layer, or the solid electrolyte may be partially included in a negative electrode active material of the negative electrode independent of the solid electrolyte layer.

To enhance the lifetime characteristics of the battery, inhibit a decrease in battery capacity, and enhance the discharge capacity of the battery, the electrolyte may further include one or more types of additives, for example, a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in addition to the components of the electrolyte. Here, the additive(s) may be included at 0.1 to 5 wt% with respect to the total weight of the electrolyte.

Since the lithium secondary battery including the positive electrode active material according to the present invention stably exhibits an excellent discharge capacity, excellent output characteristics and excellent lifetime characteristics, it is useful in portable devices such as a mobile phone, a notebook computer and a digital camera and an electric vehicle field such as a hybrid electric vehicle (HEV).

The outer shape of the lithium secondary battery according to the present invention is not particularly limited, but may be a cylindrical, prismatic, pouch or coin type. In addition, the lithium secondary battery may be used in a battery cell that is not only used as a power source of a small device, but also preferably used as a unit battery for a medium-to-large battery module including a plurality of battery cells.

According to still another exemplary embodiment of the present invention, a battery module including the lithium secondary battery as a unit cell and/or a battery pack including the same is provided.

The battery module or the battery pack may be used as a power source of any one or more medium-to-large devices including a power tool; an electric motor vehicle such as an electric vehicle (EV), a hybrid electric vehicle, and a plug-in hybrid electric vehicle (PHEV); and a power storage system.

Hereinafter, the present invention will be described in further detail with reference to examples. However, these examples are merely provided to exemplify the present invention, and thus the scope of the present invention will not be construed not to be limited by these examples.

### Preparation Example 1. Preparation of positive electrode active material

### Comparative Example 1

### (a) Preparation of precursor

An aqueous solution in which NiSO₄·6H₂O, CoSO₄·6H₂O, and MnSO₄·H₂O were mixed in a molar ratio of 40:2:58, NaOH (aq) and NH₄OH (aq) were added to a reactor and then stirred. The temperature in the reactor was maintained at 50 °C, and an N₂- and O₂-containing gas was introduced into the reactor to perform a precursor synthesis reaction. After the reaction was completed, washing and dehydration were performed, thereby obtaining a hydroxide precursor with the composition of Ni_{0.4}Co_{0.02}Mn_{0.58}(OH)₂.

### (b) First heat treatment

An oxide precursor was obtained by heat-treating the hydroxide precursor obtained in (a) in an O₂ atmosphere at 550 °C for 5 hours and performing furnace cooling.

### (c) Second heat treatment

A mixture was prepared by mixing the oxide precursor obtained in (b) and LiOH (Li/Metal molar ratio = 1.22) as a lithium raw material.

Subsequently, a positive electrode active material that includes the final product, which is a lithium manganese-based oxide, was obtained by performing heat treatment in an O₂ atmosphere at 750 °C for 8 hours and then performing furnace cooling.

The BET specific surface area (calculated from the amount of nitrogen gas adsorption at a liquid nitrogen temperature (77K) using BELSORP-mini II from BEL Japan) of the final product was measured to be 3.30 m²/g.

### Comparative Example 2

### (a) Preparation of precursor

An aqueous solution in which NiSO₄·6H₂O, CoSO₄·6H₂O, and MnSO₄·H₂O were mixed in a molar ratio of 40:2:58, NaOH (aq) and NH₄OH (aq) were added to a reactor and then stirred. The temperature in the reactor was maintained at 50 °C, and an N₂- and O₂-containing gas was introduced into the reactor to perform a precursor synthesis reaction. After the reaction was completed, washing and dehydration were performed, thereby obtaining a hydroxide precursor with the composition of Ni_{0.4}Co_{0.02}Mn_{0.58}(OH)₂.

### (b) First heat treatment

An oxide precursor was obtained by heat-treating the hydroxide precursor obtained in (a) in an O₂ atmosphere at 550 °C for 5 hours and performing furnace cooling.

### (c) Second heat treatment

A mixture was prepared by mixing the oxide precursor obtained in (b) and LiOH (Li/Metal molar ratio = 1.22) and LiF (weighed so as to be 2.0 mol% based on the entire mixture) as lithium raw materials.

Subsequently, a positive electrode active material that includes the final product, which is a lithium manganese-based oxide, was obtained by performing heat treatment in an O₂ atmosphere at 750 °C for 8 hours and then performing furnace cooling.

The BET specific surface area (calculated from the amount of nitrogen gas adsorption at a liquid nitrogen temperature (77K) using BELSORP-mini II from BEL Japan) of the final product was measured to be 2.24 m²/g.

### Comparative Example 3

A positive electrode active material was prepared in the same manner as in Comparative Example 1, except that in (c), LiF weighed so as to be 3.0 mol% based on the entire mixture was used.

The BET specific surface area (calculated from the amount of nitrogen gas adsorption at a liquid nitrogen temperature (77K) using BELSORP-mini II from BEL Japan) of the final product obtained in Comparative Example 3 was measured to be 1.55 m²/g.

### Comparative Example 4

### (a) Preparation of precursor

An aqueous solution in which NiSO₄·6H₂O, CoSO₄·6H₂O, and MnSO₄·H₂O were mixed in a molar ratio of 40:2:58, NaOH (aq) and NH₄OH (aq) were added to a reactor and then stirred. The temperature in the reactor was maintained at 50 °C, and an N₂- and O₂-containing gas was introduced into the reactor to perform a precursor synthesis reaction. After the reaction was completed, washing and dehydration were performed, thereby obtaining a hydroxide precursor with the composition of Ni_{0.4}Co_{0.02}Mn_{0.58}(OH)₂.

### (b) First heat treatment

An oxide precursor was obtained by heat-treating the hydroxide precursor obtained in (a) in an O₂ atmosphere at 550 °C for 5 hours and performing furnace cooling.

### (c) Second heat treatment

A mixture was prepared by mixing the oxide precursor obtained in (b) and LiOH (Li/Metal molar ratio = 1.22) and LiF (weighed so as to be 1.0 mol% based on the entire mixture) as lithium raw materials.

Subsequently, a positive electrode active material that includes the final product, which is a lithium manganese-based oxide, was obtained by performing heat treatment in an O₂ atmosphere at 825 °C for 8 hours and then performing furnace cooling.

The BET specific surface area (calculated from the amount of nitrogen gas adsorption at a liquid nitrogen temperature (77K) using BELSORP-mini II from BEL Japan) of the final product was measured to be 1.42 m²/g.

### Comparative Example 5

### (a) Preparation of precursor

An aqueous solution in which NiSO₄·6H₂O, CoSO₄·6H₂O, and MnSO₄·H₂O were mixed in a molar ratio of 40:2:58, NaOH (aq) and NH₄OH (aq) were added to a reactor and then stirred. The temperature in the reactor was maintained at 50 °C, and an N₂- and O₂-containing gas was introduced into the reactor to perform a precursor synthesis reaction. After the reaction was completed, washing and dehydration were performed, thereby obtaining a hydroxide precursor with the composition of Ni_{0.4}Co_{0.02}Mn_{0.58}(OH)₂.

### (b) First heat treatment

A mixture was prepared by mixing the hydroxide precursor obtained in (a) and LiOH (Li/Metal molar ratio = 1.22) and LiF (weighed so as to be 1.0 mol% based on the entire mixture) as lithium raw materials.

Subsequently, a positive electrode active material that includes the final product, which is a lithium manganese-based oxide, was obtained by performing heat treatment in an O₂ atmosphere at 750 °C for 8 hours and then performing furnace cooling.

The BET specific surface area (calculated from the amount of nitrogen gas adsorption at a liquid nitrogen temperature (77K) using BELSORP-mini II from BEL Japan) of the final product was measured to be 1.57 m²/g.

### Comparative Example 6

### (a) Preparation of precursor

An aqueous solution in which NiSO₄·6H₂O, CoSO₄·6H₂O, and MnSO₄·H₂O were mixed in a molar ratio of 40:2:58, NaOH (aq) and NH₄OH (aq) were added to a reactor and then stirred. The temperature in the reactor was maintained at 50 °C, and an N₂- and O₂-containing gas was introduced into the reactor to perform a precursor synthesis reaction. After the reaction was completed, washing and dehydration were performed, thereby obtaining a hydroxide precursor with the composition of Ni_{0.4}Co_{0.02}Mn_{0.58}(OH)₂.

### (b) First heat treatment

An oxide precursor was obtained by heat-treating the hydroxide precursor obtained in (a) in an O₂ atmosphere at 550 °C for 5 hours and performing furnace cooling.

### (c) Second heat treatment

A mixture was prepared by mixing the oxide precursor obtained in (b) and LiOH (Li/Metal molar ratio = 1.22) and LiF (weighed so as to be 1.0 mol% based on the entire mixture) as lithium raw materials.

Subsequently, a positive electrode active material that includes the final product, which is a lithium manganese-based oxide, was obtained by performing heat treatment in an O₂ atmosphere at 705 °C for 8 hours and then performing furnace cooling.

The BET specific surface area (calculated from the amount of nitrogen gas adsorption at a liquid nitrogen temperature (77K) using BELSORP-mini II from BEL Japan) of the final product was measured to be 3.60 m²/g.

### Example 1

### (a) Preparation of precursor

An aqueous solution in which NiSO₄·6H₂O, CoSO₄·6H₂O, and MnSO₄·H₂O were mixed in a molar ratio of 40:2:58, NaOH (aq) and NH₄OH (aq) were added to a reactor and then stirred. The temperature in the reactor was maintained at 50 °C, and an N₂- and O₂-containing gas was introduced into the reactor to perform a precursor synthesis reaction. After the reaction was completed, washing and dehydration were performed, thereby obtaining a hydroxide precursor with the composition of Ni_{0.4}Co_{0.02}Mn_{0.58}(OH)₂.

### (b) First heat treatment

An oxide precursor was obtained by heat-treating the hydroxide precursor obtained in (a) in an O₂ atmosphere at 550 °C for 5 hours and performing furnace cooling.

### (c) Second heat treatment

A mixture was prepared by mixing the oxide precursor obtained in (b) and LiOH (Li/Metal molar ratio = 1.22) and LiF (weighed so as to be 0.5 mol% based on the entire mixture) as lithium raw materials.

Subsequently, a positive electrode active material that includes the final product, which is a lithium manganese-based oxide, was obtained by performing heat treatment in an O₂ atmosphere at 750 °C for 8 hours and then performing furnace cooling.

The BET specific surface area (calculated from the amount of nitrogen gas adsorption at a liquid nitrogen temperature (77K) using BELSORP-mini II from BEL Japan) of the final product was measured to be 3.09 m²/g.

### Example 2

A positive electrode active material was prepared in the same manner as in Example 1, except that in (c), LiF weighed so as to be 1.0 mol% based on the entire mixture was used.

The BET specific surface area (calculated from the amount of nitrogen gas adsorption at a liquid nitrogen temperature (77K) using BELSORP-mini II from BEL Japan) of the final product obtained in Example 2 was measured to be 2.72 m²/g.

### Example 3

A positive electrode active material was prepared in the same manner as in Example 1, except that in (c), LiF weighed so as to be 1.5 mol% based on the entire mixture was used.

The BET specific surface area (calculated from the amount of nitrogen gas adsorption at a liquid nitrogen temperature (77K) using BELSORP-mini II from BEL Japan) of the final product obtained in Example 3 was measured to be 2.57 m²/g.

### Example 4

### (a) Preparation of precursor

An aqueous solution in which NiSO₄·6H₂O, CoSO₄·6H₂O, and MnSO₄·H₂O were mixed in a molar ratio of 40:2:58, NaOH (aq) and NH₄OH (aq) were added to a reactor and then stirred. The temperature in the reactor was maintained at 50 °C, and an N₂- and O₂-containing gas was introduced into the reactor to perform a precursor synthesis reaction. After the reaction was completed, washing and dehydration were performed, thereby obtaining a hydroxide precursor with the composition of Ni_{0.4}Co_{0.02}Mn_{0.58}(OH)₂.

### (b) First heat treatment

An oxide precursor was obtained by heat-treating the hydroxide precursor obtained in (a) in an O₂ atmosphere at 550 °C for 5 hours and performing furnace cooling.

### (c) Second heat treatment

A mixture was prepared by mixing the oxide precursor obtained in (b) and LiOH (Li/Metal molar ratio = 1.22) and LiF (weighed so as to be 1.0 mol% based on the entire mixture) as lithium raw materials.

Subsequently, a positive electrode active material that includes the final product, which is a lithium manganese-based oxide, was obtained by performing heat treatment in an O₂ atmosphere at 775 °C for 8 hours and then performing furnace cooling.

The BET specific surface area (calculated from the amount of nitrogen gas adsorption at a liquid nitrogen temperature (77K) using BELSORP-mini II from BEL Japan) of the final product was measured to be 2.46 m²/g.

### Example 5

### (a) Preparation of precursor

An aqueous solution in which NiSO₄·6H₂O, CoSO₄·6H₂O, and MnSO₄·H₂O were mixed in a molar ratio of 40:2:58, NaOH (aq) and NH₄OH (aq) were added to a reactor and then stirred. The temperature in the reactor was maintained at 50 °C, and an N₂- and O₂-containing gas was introduced into the reactor to perform a precursor synthesis reaction. After the reaction was completed, washing and dehydration were performed, thereby obtaining a hydroxide precursor with the composition of Ni_{0.4}Co_{0.02}Mn_{0.58}(OH)₂.

### (b) First heat treatment

An oxide precursor was obtained by heat-treating the hydroxide precursor obtained in (a) in an O₂ atmosphere at 550 °C for 5 hours and performing furnace cooling.

### (c) Second heat treatment

A mixture was prepared by mixing the oxide precursor obtained in (b) and LiOH (Li/Metal molar ratio = 1.22) and LiF (weighed so as to be 1.0 mol% based on the entire mixture) as lithium raw materials.

Subsequently, a positive electrode active material that includes the final product, which is a lithium manganese-based oxide, was obtained by performing heat treatment in an O₂ atmosphere at 800 °C for 8 hours and then performing furnace cooling.

The BET specific surface area (calculated from the amount of nitrogen gas adsorption at a liquid nitrogen temperature (77K) using BELSORP-mini II from BEL Japan) of the final product was measured to be 1.72 m²/g.

### Preparation Example 2. Preparation of lithium secondary battery (half-cell)

A positive electrode slurry was prepared by dispersing 90 wt% each of the positive electrode active materials prepared according to Preparation Example 1, 4.5 wt% of carbon black and 5.5 wt% of a PVDF binder in N-methyl-2 pyrrolidone (NMP).

The positive electrode slurry was uniformly applied on an aluminum thin film with a thickness of 15 µm and vacuum-dried at 135 °C, thereby manufacturing a positive electrode for a lithium secondary battery in which a positive electrode active material layer is formed.

The positive electrode, lithium foil as a counter electrode to the positive electrode, a porous polyethylene film (Celgard 2300, thickness: 25 µm) as a separator, and a liquid electrolyte in which LiPF₆ was present at 1.15M in a solvent in which ethylene carbonate, dimethyl carbonate and ethyl methyl carbonate were mixed in a volume ratio of 2:4:4 were used to manufacture a half-cell.

### Experimental Example 1. XRD analysis of positive electrode active material

X-ray diffraction (XRD) analysis was performed on each positive electrode active material prepared according to Preparation Example 1 to detect diffraction peaks appearing in the area of 2θ=18°~19° and the area of 2θ=44°~45° from the positive electrode active material, and the full width at half maximum (FWHM) of each diffraction peak was calculated. The XRD analysis was performed using a Bruker D8 Advance diffractometer with Cu-Kα radiation (1.540598Å).

The XRD analysis results are shown in Table 1 below.

**[Table 1]**

| Classification | FWHMₐ | FWHM_{b} | FWHM_{b}/FWHM ₐ |
|---|---|---|---|
| Comparative Example 1 | 0.221 | 0.566 | 2.561 |
| Comparative Example 2 | 0.189 | 0.641 | 3.392 |
| Comparative Example 3 | 0.192 | 0.777 | 4.047 |
| Comparative Example 4 | 0.223 | 0.54 | 2.422 |
| Comparative Example 5 | 0.24 | 0.417 | 1.738 |
| Comparative Example 6 | 0.237 | 0.614 | 2.592 |
| Example 1 | 0.205 | 0.516 | 2.517 |
| Example 2 | 0.198 | 0.512 | 2.586 |
| Example 3 | 0.191 | 0.509 | 2.665 |
| Example 4 | 0.17 | 0.41 | 2.432 |
| Example 5 | 0.14 | 0.31 | 2.214 |

| | | | |
|---|---|---|---|
| - FWHMₐ: FWHM of diffraction peak appearing in the area of 2θ=18°~19° - FWHM_{b}: FWHM of diffraction peak appearing in the area of 2θ=44°~45° | | | |

Referring to the results in Table 1, it can be confirmed that, in the positive electrode active materials according to Examples 1 to 5, the FWHM of the diffraction peak appearing in the area of 2θ=18°~19° and the FWHM of the diffraction peak appearing in the area of 2θ=44°~45° are reduced, compared to the positive electrode active material according to Comparative Example 1. However, it can be confirmed that FWHM_{b}/FWHMₐ calculated from each of the positive electrode active materials according to Examples 1 to 5 was similar to that of Comparative Example 1.

On the other hand, it can be confirmed that, in the positive electrode active materials according to Comparative Examples 2 and 3, the FWHM of the diffraction peak appearing in the area of 2θ=18°~19° was reduced, but the FWHM of the diffraction peak appearing in the area of 2θ=44°~45° was increased, compared to the positive electrode active material according to Comparative Example 1.

In addition, it was confirmed that, as the second heat treatment temperature was set to the eutectic point or higher based on the LiF-LiOH binary phase diagram, LiF is decomposed and mostly doped into a lithium manganese-based oxide, rather than forming a coating layer containing LiF on the surface of the lithium manganese-based oxide, and thus the positive electrode active material according to Comparative Example 4 shows a diffraction peak FWHM almost similar to that of the positive electrode active material according to Comparative Example 1.

In addition, it was confirmed that, in the positive electrode active material according to Comparative Example 5, the FWHM of the diffraction peak appearing in the area of 2θ=44°~45° decreased compared to the positive electrode active material according to Comparative Example 1, but the FWHM of the diffraction peak appearing in the area of 2θ=18°~19° increased, and in the positive electrode active material according to Comparative Example 6, both the FWHM of the diffraction peak appearing in the area of 2θ=18°~19° and the FWHM of the diffraction peak appearing in the area of 2θ=44°~45° increased, compared to the positive electrode active material according to Comparative Example 1.

### Experimental Example 2. Evaluation of electrochemical properties of lithium secondary battery (half-cell)

For the lithium secondary batteries (half-cell) produced in Preparation Example 2, the initial charge capacity, and rate performance (rate capability (C-rate)) were measured by a charge/discharge experiment to which 25 °C, a voltage range of 2.5V to 4.7V, and a discharge rate of 2.0C/0.2C were applied using an electrochemical analysis device (Toyo, Toscat-3100).

In addition, after the same half-cell was charged/discharged 50 times at 25 °C in a driving voltage range of 2.5V to 4.7V under the condition of 2.0C/0.2C, the ratio of the discharge capacity at the 50^{th} cycle to the initial discharge capacity (cycle capacity retention) was measured.

The measurement results are shown in Table 2 below.

**[Table 2]**

| Classification | Initial charge capacity | Initial discharge capacity | 2.0C/0.2C rate capability |
|---|---|---|---|
| | mAh/g | mAh/g | % |
| Comparative Example 1 | 249.2 | 227.2 | 76.92 |
| Comparative Example 2 | 263.9 | 230.8 | 73.03 |
| Comparative Example 3 | 253.9 | 214.7 | 63.46 |
| Comparative Example 4 | 258.1 | 232.6 | 75.69 |
| Comparative Example 5 | 238.6 | 213.3 | 75.50 |
| Comparative Example 6 | 246.7 | 224.8 | 77.23 |
| Example 1 | 266.8 | 241.7 | 80.73 |
| Example 2 | 273.1 | 246.7 | 80.38 |
| Example 3 | 273.4 | 247 | 80.00 |
| Example 4 | 270.1 | 244.9 | 79.21 |
| Example 5 | 266.5 | 244.5 | 78.78 |

Referring to the half-cell evaluation results in Table 2, compared to the lithium secondary batteries using the positive electrode active materials according to Comparative Examples 1 to 6, it can be confirmed that the initial charge capacity, the initial discharge capacity, and the rate performance of the lithium secondary batteries using the positive electrode active materials according to Examples 1 to 5 are overall improved.

Particularly, in the case of the positive electrode active material according to Comparative Example 3, as the content of LiF used before the second heat treatment is excessively large, the BET specific surface area of the positive electrode active material is excessively reduced, and thus it can be expected that the rate performance is lower than those of the positive electrode active material according to Comparative Example 1. In addition, in the case of the positive electrode active material according to Comparative Example 4, as the second heat treatment temperature is excessively increased, the BET specific surface area of the positive electrode active material is excessively reduced, and thus it can be expected that the rate performance is lower than that of the positive electrode active material according to Comparative Example 1.

In the case of the positive electrode active material according to Comparative Example 5, when the same second heat treatment temperature was applied, compared to the case using an oxide precursor, the BET specific surface area is excessively low, and thus it can be expected that the rate performance is lower than that of the positive electrode active material using an oxide precursor.

### Experimental Example 3. Analysis of residual lithium in positive electrode active material

The analysis of the content of residual lithium (lithium impurities) in the positive electrode active material prepared according to Preparation Example 1 was performed through pH titration. The pH titration measured the content of residual lithium (lithium impurities) using the amount of 0.1N HCl until pH 4 was reached by pH titration for the positive electrode active material. Specifically, 5 g of each positive electrode active material prepared according to Preparation Example 1 was added to 100 mL of DIW, stirred for 15 minutes and then filtered. Then, 50 mL of the filtered solution was taken, 0.1 M HCl was added thereto, and the HC1 consumption was measured according to the pH change to calculate the LiOH and Li₂CO₃ contents.

Meanwhile, when there is a LiF-containing coating layer formed on the surface of the positive electrode active material (lithium manganese-based oxide) prepared according to Preparation Example 1, LiF reacts with deionized water during pH titration to generate HF, and a reversible reaction of HF that decomposes Li₂CO₃ dissolved in deionized water occurs.

### <Li₂CO₃ decomposition reaction by LiF>

LiF + H₂O → LiOH + HF

2HF + Li₂CO₃ → 2LiF + CO₂ + H₂O

That is, as the LiF content on the surface of the positive electrode active material (lithium manganese-based oxide) increases, the LiOH content measured in the pH titration increases, and the Li₂CO₃ content decreases. Accordingly, when LiF is decomposed and then doped into the lithium manganese-based oxide during heat treatment rather than being coated on the surface of the lithium manganese-based oxide, no changes in LiOH and Li₂CO₃ contents caused by the above-described reversible reaction are observed.

The residual lithium analysis results are shown in Table 3 below.

**[Table 3]**

| Classification | LiOH (ppm) | Li₂CO₃ (ppm) | Sum of residual lithium (ppm) |
|---|---|---|---|
| Comparative Example 1 | 1,669 | 860 | 2,529 |
| Comparative Example 4 | 1,774 | 748 | 2,522 |
| Example 1 | 1,938 | 617 | 2,555 |
| Example 2 | 2,262 | 517 | 2,779 |

Referring to the results of Table 3, compared to the positive electrode active material according to Comparative Example 1, it can be confirmed that, in the positive electrode active materials according to Examples 1 and 2, the LiOH content increases, but the Li₂CO₃ content decreases, and the total amount of residual lithium remained almost unchanged. In addition, comparing the positive electrode active material according to Example 1 with the positive electrode active material according to Example 2, it can be confirmed that as the LiF content in the positive electrode active material increased, the LiOH content further increased and the Li₂CO₃ content further decreased.

Meanwhile, in the case of the positive electrode active material according to Comparative Example 4, as the second heat treatment temperature was set to the eutectic point or higher based on the LiF-LiOH binary phase diagram, LiF is decomposed and then mostly doped into a lithium manganese-based oxide rather than forming an LiF-containing coating layer on the surface of the lithium manganese-based oxide. Therefore, it was confirmed that a change in Li₂CO₃ content is small compared to Examples 1 and 2.

### Experimental Example 4. XPS analysis of positive electrode active material

XPS analysis of a lithium manganese-based oxide selected from the positive electrode active materials according to Examples 1 and 2 was performed to measure the content of a target element (F) contained in the lithium manganese-based oxide.

Specifically, a change in the content of a target element (F) from the surface region of the lithium manganese-based oxide (secondary particles) to the center of the lithium manganese-based oxide (secondary particles) was measured by increasing the etching time for the surface of the lithium manganese-based oxide through an XPS depth profile analysis method (Ion energy 2000eV, spot size 200 µm).

Referring to FIG. 1 showing the XPS analysis results, it can be confirmed that there is a high concentration of F on the surface of a lithium manganese-based oxide included in the positive electrode active materials according to Examples 1 and 2. These results show that an LiF coating layer was formed on the surface of a lithium manganese-based oxide included in the positive electrode active materials according to Examples 1 and 2. In addition, it can be confirmed that the concentration of F decreases as the etching time increases. These results are due to the diffusion of LiF from the surface region to the center of the lithium manganese-based oxide along a grain boundary between the primary particles, and thereby the formation of a gradient in which the concentration (at%) of F decreases.

According to the present invention, compared to a commercially available ternary lithium composite oxide with a nickel-cobalt-manganese (NCM) or nickel-cobalt-aluminum (NCA) composition, it is possible to improve the limitations of existing overlithiated lithium manganese-based oxide, which has several disadvantages in terms of electrochemical properties and/or stability.

Specifically, according to the present invention, by using LiF in the calcination of the lithium manganese-based oxide, phase development specific to the lithium manganese-based oxide can be sufficiently promoted even at low temperatures, and side reactions between the lithium manganese-based oxide and an electrolyte can be reduced without decreasing rate performance by reducing a specific surface area to an appropriate level.

As above, according to the present invention, by making it possible to induce phase development specific to the lithium manganese-based oxide even at relatively low temperatures, the production costs of the lithium manganese-based oxide can be reduced and the overgrowth of primary particles can be inhibited.

In addition, according to the present invention, the LiF used in calcination can compensate for the insufficient lithium-ion conductivity of the lithium manganese-based oxide by forming a coating layer containing LiF on the surface of the lithium manganese-based oxide, instead of being doped into the lithium manganese-based oxide. Particularly, according to the present invention, since a hydroxide precursor is converted to an oxide precursor through roasting before calcination and then mixed with a lithium raw material and LiF to perform calcination, doping of LiF into the lithium manganese-based oxide in the calcination can be effectively prevented.

In addition, the present invention can compensate for the insufficient lithium-ion conductivity of the lithium manganese-based oxide because the LiF used in calcination is present in the form of a coating layer on the surface of the lithium manganese-based oxide.

In addition to the above effects, specific effects of the present invention will be described together while explaining specific details for carrying out the present invention.

In the above, although the embodiments of the present invention have been described, it will be understood by those of ordinary skill in the art that the present invention may be changed and modified in various ways by addition, modification, or deletion of components without departing from the spirit of the present invention defined in the appended claims.

## Claims

1. A positive electrode active material, comprising:
a lithium manganese-based oxide in which a phase belonging to a C2/m space group and a phase belonging to a R3-m space group are dissolved; and
a coating present on at least a part of the surface of the lithium manganese-based oxide,
wherein the coating includes fluorine, and
in X-ray diffraction analysis of the positive electrode active material using Cu-Kα rays, the full width at half maximum (FWHMₐ) of the diffraction peak appearing in the area of 2θ=18°~19° is 0.14 or more and less than 0.221, and the full width at half maximum (FWHM_{b}) of the diffraction peak appearing in the area of 2θ=44°~45° is 0.31 or more and less than 0.641.

2. The positive electrode active material of claim 1, wherein, in X-ray diffraction analysis of the positive electrode active material using Cu-Kα rays, the ratio (FWHM_{b}/FWHMₐ) of the FWHM_{b} of the diffraction peak appearing in the area of 2θ=44°~45° to the FWHMₐ of the diffraction peak appearing in the area of 2θ=18°∼19° is more than 1.738 and 2.665 or less.

3. The positive electrode active material of any one of claims 1 to 2, wherein the lithium manganese-based oxide includes lithium, manganese, and a transition metal other than manganese.

4. The positive electrode active material of any one of claims 1 to 3, wherein the coating includes LiF.

5. The positive electrode active material of any one of claims 1 to 4, wherein LiF in the positive electrode active material is present in an amount of 0.5 to 1.5 mol%.

6. The positive electrode active material of any one of claims 1 to 5, wherein the average thickness of the coating is 5 to 30 nm, and
the content of fluorine in the coating is 2 to 10 at%.

7. The positive electrode active material of any one of claims 1 to 6, wherein the lithium manganese-based oxide is present as secondary particles in which a plurality of primary particles are aggregated, and
wherein a concentration of LiF is present in the surface region of the secondary particle is higher than a concentration of LiF is present in the center of the secondary particle.

8. The positive electrode active material of any one of claims 1 to 7, wherein the lithium manganese-based oxide is present as secondary particles in which a plurality of primary particles are aggregated, and
wherein a concentration gradient of fluorine that decreases from the surface region of secondary particle to the center of secondary particle presents along a grain boundary between the primary particles.

9. The positive electrode active material of any one of claims 1 to 8, wherein the lithium manganese-based oxide is represented by Chemical Formula 1 below:
[Chemical Formula 1] Li(LiₐM1ₓM2_{y})O_{2-b}X_{b}
wherein,
M1 is at least one selected from Ni and Mn,
M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, wherein M2 does not overlap M1,
X is a halogen optionally substituting some of the oxygen present in the lithium manganese-based oxide,
0<a≤0.7, 0≤b≤0.1, 0<x≤1, 0≤y<1, and 0<x+y≤1.

10. The positive electrode active material of any one of claims 1 to 8, wherein the lithium manganese-based oxide is represented by Chemical Formula 1-1 below:
[Chemical Formula 1-1] rLi₂MnO_{3-c}X'_{c}·(1-r)Li_{a'}M1_{x'}M2_{y'}O_{2-b'}X_{b'}
wherein,
M1 is at least one selected from Ni and Mn,
M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, wherein M2 does not overlap Ml,
X and X' each are independently halogens optionally substituting some of the oxygen present in the lithium manganese-based oxide,
0<r≤0.7, 0≤c≤0.1, 0<a'≤1, 0≤b'≤0.1, 0<x'≤1, 0≤y'<1, and 0<x'+y'≤1.

11. The positive electrode active material of any one of claims 1 to 10, wherein the positive electrode active material has a BET specific surface area of 1.6 m²/g or more and 3.2 m²/g or less.

12. A positive electrode comprising the positive electrode active material according to any one of claims 1 to 11.

13. A lithium secondary battery using the positive electrode of claim 12.
